# EUROPEAN PATENT APPLICATION

(11) **EP 4 660 689 A1**
(43) Date of publication of application: **10.12.2025**
(21) Application number: 25747976.6
(22) Date of filing: 26.01.2025
(51) Int. Cl.: G02B 27/01, G02B 17/08

(54) **OPTICAL SYSTEM AND HEAD-MOUNTED DISPLAY DEVICE**

(30) Priority: 31.01.2024 CN 202410140167; 05.02.2024 CN 202410166394
(71) Applicant: Beijing Unicorn Technology Co., Ltd., Beijing 100098 (CN)
(72) Inventor: LIAO, Yizhou, Beijing 100098 (CN); XIAO, Bing, Beijing 100098 (CN)
(74) Representative: Grünecker Patent- und Rechtsanwälte PartG mbB
(86) International application number: PCT/CN2025/075331
(87) International publication number: WO 2025/162412

(57) **Abstract**

Embodiments of the present disclosure disclose an optical system and a head-mounted display device. The specific implementation solution is as follows: the optical system comprises: an image source; a first prism having a first surface, a second surface, and a third surface, wherein the first surface is arranged close to the first lens; a lens arranged close to the third surface, wherein a second surface of the first prism is away from the lens; a reflective film arranged on the side of the second lens away from the third surface; wherein light emitted by the image source enters from the first surface of the first prism, undergoes at least one total reflection within the first prism, and then exits through the third surface to the second lens. Among the light rays emitted by the image source, the light ray propagating along the optical axis of the optical system passes through a preset optical path length d within the first prism when passing through the first prism for the first time; the light rays reflected by the reflective film exit after passing through the first prism again; and the ratio f/d of the system focal length f of the optical system to d is greater than or equal to 0.45 and less than or equal to 0.60.

## Description

The present disclosure claims the priority of the Chinese patent application filed with the Chinese Patent Office on January 31, 2024, with an application number of CN202410140167.1 and entitled "Optical System and Head-Mounted Display Device", and claims the priority of the Chinese patent application filed with the Chinese Patent Office on February 5, 2024, with an application number of CN202410166394.1 and entitled "Optical System and Head-Mounted Display Device", the contents of which are incorporated herein by reference in their entireties.

### Technical Field

The present disclosure relates to the field of optical imaging technology, in particular to an optical system and a head-mounted display device.

### Background

Currently, applications of head-mounted display devices are becoming increasingly widespread. The head-mounted display devices can be used for content display, for example, the head-mounted display devices can be used to display movie images, game images, web pages, etc. The optical system is an important component of the head-mounted display device.

### Summary

According to one aspect of the embodiments of the present disclosure, an optical system is provided and includes: an image source; a first prism having a first surface, a second surface, and a third surface, wherein the first surface of the first prism is arranged close to the first lens; a lens arranged close to the third surface of the first prism, wherein the second surface of the first prism is away from the lens; a reflective film arranged on the side of the second lens away from the third surface of the first prism; wherein light rays emitted by the image source enters from the first surface of the first prism, undergo at least one total reflection within the first prism, and then exits through the third surface of the first prism to the second lens. Among the light rays emitted by the image source, a light ray propagating along the optical axis of the optical system passes through a preset optical path length d within the first prism when the light ray passes through the first prism for the first time; the light rays reflected by the reflective film exit after passing through the first prism again; and the optical system satisfies the condition that the ratio f/d of the system focal length f of the optical system to the preset optical path length d is greater than or equal to 0.45 and less than or equal to 0.60.

According to another aspect of the embodiments of the present disclosure, a head-mounted display device is provided and includes: a frame structure; and the above optical system mounted to the frame structure.

### Brief Description of the Drawings

The above and other objects, features and advantages of the present disclosure will become more apparent from a more detailed description of the embodiments of the present disclosure in conjunction with the accompanying drawings. The accompanying drawings are used to provide further understanding of the embodiments of the present disclosure, and constitute a part of the specification, and are used, together with the embodiments of the present disclosure, for explaining the present disclosure, but do not limit the present disclosure. In the accompanying drawings, the same reference numerals generally represent the same components or steps.
Fig. 1 is a structural schematic diagram of an optical system provided in some exemplary embodiments of the present disclosure;
Fig. 2 is a structural schematic diagram of an optical system provided in some other exemplary embodiments of the present disclosure;
Fig. 3 is a structural schematic diagram of an optical system provided in still some exemplary embodiments of the present disclosure;
Fig. 4 is a structural schematic diagram of an optical system provided in still some exemplary embodiments of the present disclosure;
Fig. 5 is a structural schematic diagram of an optical system provided in still some exemplary embodiments of the present disclosure;
Fig. 6 is a schematic diagram of a modulation transfer function curve of the optical system in some exemplary embodiments of the present disclosure;
Fig. 7 is a structural schematic diagram of an optical system provided in some exemplary embodiments of the present disclosure;
Fig. 8 is a structural schematic diagram of an optical system provided in some other exemplary embodiments of the present disclosure;
Fig. 9 is a structural schematic diagram of an optical system provided in still some exemplary embodiments of the present disclosure;
Fig. 10 is a structural schematic diagram of a first prism in some exemplary embodiments of the present disclosure;
Fig. 11 is a structural schematic diagram of an optical system provided in still some exemplary embodiments of the present disclosure;
Fig. 12 is a schematic diagram of a modulation transfer function curve of the optical system in some exemplary embodiments of the present disclosure;
Fig. 13 is a schematic diagram of a frame structure in some exemplary embodiments of the present disclosure.

### Detailed Description

Exemplary embodiments according to the present disclosure will be described below in detail with reference to the accompanying drawings. Obviously, the described embodiments are merely part but not all of the embodiments of the present disclosure. It should be understood that the present disclosure is not limited by the exemplary embodiments described herein.

In the description of the present disclosure, the orientation or positional relationships indicated by the terms "upper", "lower", "left", "right" and the like are based on the orientation or positional relationships shown in the accompanying drawings. They are only for the convenience of describing the present disclosure and simplifying the description, rather than indicating or implying that the device referred to must have a specific orientation, or must be constructed and operated in a specific orientation. Therefore, they should not be construed as limitations to the present disclosure.

In the description of the present disclosure, unless otherwise clearly specified and limited, the terms "mounting", "connection", "fixation" and the like shall be understood in a broad sense. For example, the connection can be a fixed connection, a detachable connection, or an integral connection; and the connection can be a direct connection or an indirect connection through an intermediate medium. For those skilled in the art, specific meanings of the above terms in the present disclosure can be understood according to specific circumstances.

### Exemplary Overview

The head-mounted display device can also be referred to as a head-mounted display (HMD) or a headset. The head-mounted display device can be configured to achieve augmented reality (AR) effects, virtual reality (VR) effects, mixed reality (MR) effects, etc., and can be presented in such forms as glasses or helmets.

As an important component of the head-mounted display device, the optical system can also be referred to as an optical engine. The optical system can be configured to emit light of a display image of the head-mounted display device, and process the light, such that the light enters the eyes of the user wearing the head-mounted display device, and the user can see the display image. Therefore, in order to ensure the usage experience of the user, it is necessary to design the optical system reasonably.

### Exemplary Structure

Some exemplary embodiments of the present disclosure provide an optical system. The optical system provided in the embodiments of the present disclosure may include an image source 10, a first prism 20, a lens 30, and a reflective film 40. The first prism 20 may have a first surface 201, a second surface 203, and a third surface 205, wherein the first surface 201 of the first prism 20 may be arranged close to the image source 10; the second surface 203 of the first prism 20 may be arranged close to an eye box of the optical system; the lens 30 may be arranged close to the third surface 205 of the first prism 20; the second surface 203 of the first prism 20 is away from the lens 30; and the reflective film 40 may be arranged at a side of the lens 30 away from the third surface 205 of the first prism 20.

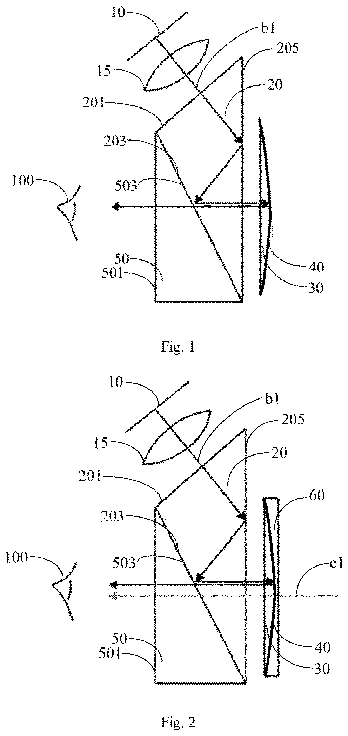

Some exemplary embodiments of the present disclosure provide an optical system. For example, as shown in Figs. 1, 2, 3, and 4, the optical system provided in the embodiments of the present disclosure may include an image source 10, a first lens 15, a first prism 20, a second lens 30, and a reflective film 40, wherein the first lens 15 may be arranged close to the image source 10; the first prism 20 may have a first surface 201, a second surface 203, and a third surface 205; the first surface 201 of the first prism 20 may be arranged close to the first lens 15; the second surface 203 of the first prism 20 may be arranged close to the eye box of the optical system; the second lens 30 may be arranged close to the third surface 205 of the first prism 20; and the reflective film 40 may be arranged on the side of the second lens 30 away from the third surface 205 of the first prism 20.

To facilitate the differentiation of components, the first lens 15 will be referred to as the first additional lens 15, and the second lens 30 will be referred to as the lens 30 hereinafter.

In some optional embodiments of the present disclosure, the image source 10 can be configured to emit light of a display image. The image source 10 may include, but is not limited to, an organic light emitting diode (OLED) image source, a liquid crystal image source, a liquid crystal on silicon (LCOS) image source, a micro electro mechanical system (MEMS) image source, a digital micromirror device (DMD), etc. For example, the image source 10 can be an OLED display screen.

In some optional embodiments of the present disclosure, the first prism 20 can be configured to extend an optical path of the optical system. The first surface 201 of the first prism 20 can be opposite to the image source 10; both the first surface 201 and the second surface 203 of the first prism 20 can be located at the side of the third surface 205 of the first prism 20 close to the eye box of the optical system; both the first surface 201 and the second surface 203 of the first prism 20 can be located at the side away from the lens 30; the first surface 201 and the second surface 203 of the first prism 20 can intersect; the first surface 201 and the third surface 205 of the first prism 20 can intersect; and the second surface 203 and the third surface 205 of the first prism 20 can intersect. If the first surface 201, the second surface 203, and the third surface 205 of the first prism 20 can all be flat surfaces, the first prism 20 can be a triangular prism.

It can be understood that the eye box of the optical system can be an area where the human eye (such as the human eye 100 in Figs. 1-2 and Figs. 7-8) can move. Within this area, the human eye 100 can see a clear and complete display image. The eye box of the optical system can also be referred to as the eye box or EB. The size of the eye box of the optical system is an important design index in the optical system.

In some optional embodiments of the present disclosure, such as the embodiments shown in Figs. 1 to 6, the optical system may have a first additional lens 15.

The first additional lens 15 can be arranged between the image source 10 and the first surface 201 of the first prism 20. Optionally, the first additional lens 15 can be an aspherical lens. In this way, the first additional lens 15 can be used to correct field curvature, pupil shift distortion and chromatic aberration to ensure the imaging quality of the optical system.

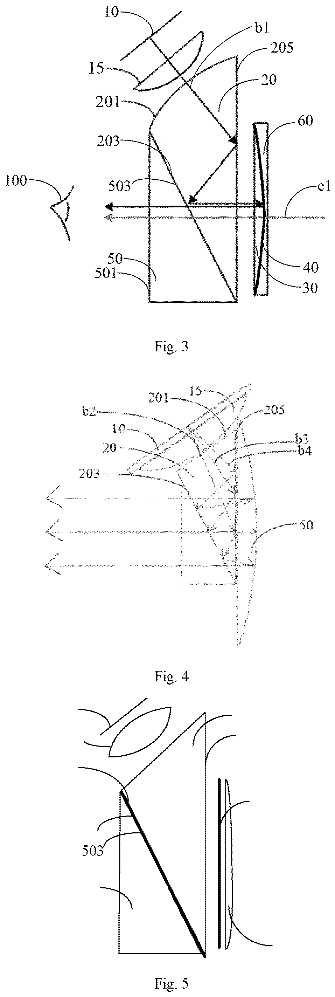

In some optional embodiments of the present disclosure, the first additional lens 15 may belong to a positive lens. For example, as shown in Figs. 1 and 2, the first additional lens 15 may be a biconvex lens. For another example, as shown in Figs. 3 and 4, the first additional lens 15 may be a plano-convex lens. In this way, the surface profile of the first additional lens 15 is relatively regular, and the processing difficulty is relatively low.

In some optional embodiments of the present disclosure, the lens 30 can be configured to correct field curvature and provide optical power to achieve a larger field of view. The lens 30 can face the third surface 205 of the first prism 20. A reflective film 40 can be arranged at the side of the lens 30 away from the third surface 205 of the first prism 20 by means of bonding or the like. The reflective film 40 can be configured to totally or partially reflect light. If the reflective film 40 is configured to partially reflect light, the reflective film 40 can be a semitransparent and semi-reflective film.

It should be noted that in the embodiments shown in Figs. 1 to 6, the light emitted by the image source 10 can enter from the first surface 201 of the first prism 20 after passing through the first additional lens 15. After at least one total reflection within the first prism 20, the light exits through the third surface 205 of the first prism 20 to the lens 30. The light reflected by the reflective film 40 exits after passing through the first prism 20 again, for example, the light exits to the eye box of the optical system.

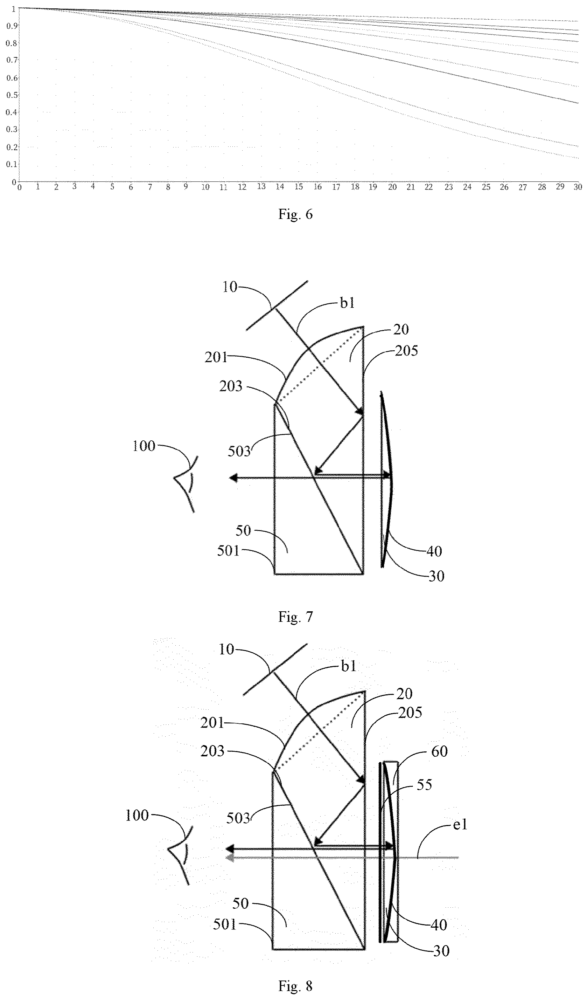

It should be noted that in the embodiments shown in Figs. 7 to 12, the light emitted by the image source 10 can enter the first surface 201 of the first prism 20. After at least one total reflection within the first prism 20, the light exits through the third surface 205 of the first prism 20 to the lens 30. The light reflected by the reflective film 40 exits after passing through the first prism 20 again, for example, the light exits to the eye box of the optical system.

The reflective film 40 can reflect the light that propagate thereto to adjust the propagation direction of the light. For example, as shown in Figs. 1 to 3 and Figs. 7 to 8, the reflective film 40 can adjust the propagation direction of the light from horizontally rightwards to horizontally leftwards. In this way, the light with the adjusted propagation direction can exit after passing through the first prism 20 again, for example, the light can exit to the eye box of the optical system.

It can be seen that in the optical system provided in the embodiments of the present disclosure, through cooperation of the image source 10, the first prism 20, the lens 30, and the reflective film 40, the light emitted by the image source 10 can enter the eye box of the optical system. In this way, the human eye 100 can see the display image provided by the image source 10. Therefore, the head-mounted display device can normally display contents to meet the usage needs of the user, such as meeting the movie-watching needs of the user.

In some embodiments of the present disclosure, for example, in the embodiments shown in Figs. 1 to 12, the first surface 201 of the first prism 20 may be a flat surface or a curved surface. Both the second surface 203 and the third surface 205 of the first prism 20 may be flat surfaces. By forming the first surface 201 of the first prism 20 into a curved surface, it is conducive to correcting the field curvature and pupil shift distortion of the optical system.

In some optional embodiments of the present disclosure, the light emitted by the image source 10 may enter from the first surface 201 of the first prism 20, then undergoes a total reflection on the third surface 205 of the first prism 20 within the first prism 20 and a reflection on the second surface 203 of the first prism 20 in sequence, and finally exits through the third surface 205 of the first prism 20.

In an optional example, as shown in Figs. 1 to 3 and Figs. 7 to 8, the light emitted by the image source 10 may include a light ray b1. The light ray b1 may enter from the first surface 201 of the first prism 20 into the first prism 20. Next, the light ray b1 may propagate to the third surface 205 of the first prism 20 and undergo a total reflection on the third surface 205 of the first prism 20 to propagate towards the second surface 203 of the first prism 20. The light ray b1 that has propagated to the second surface 203 of the first prism 20 may be reflected and exit through the third surface 205 of the first prism 20 to the lens 30.

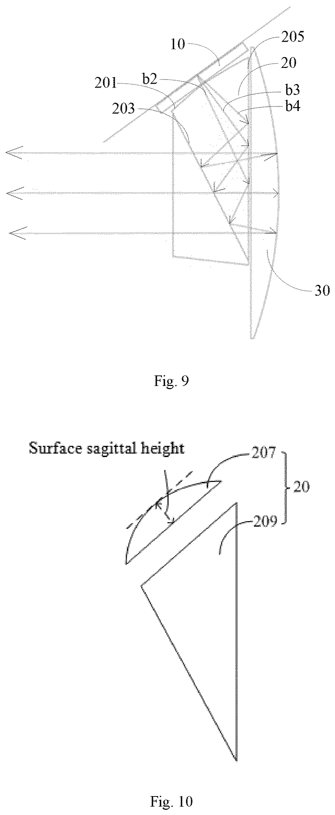

In another optional example, as shown in Figs. 4 and 9, the light emitted by the image source 10 may include a light ray b2, a light ray b3, and a light ray b4. Similar to the light ray b1, any one of the light ray b2, light ray b3, and light ray b4 may also first undergo a total reflection on the third surface 205 of the first prism 20, then is reflected on the second surface 203 of the first prism 20, and then exits through the third surface 205 of the first prism 20 to the lens 30.

It can be understood that total reflection refers to the phenomenon where when light travels from an optically denser medium to an optically thinner medium, only reflection occurs without refraction. A critical angle at which light undergoes a total reflection is related to the refractive index of the optically denser medium and the refractive index of the optically thinner medium.

In this way, after the light emitted by the image source 10 enters the first prism 20 from the first surface 201 of the first prism 2, the light can undergo one total reflection and one reflection within the first prism 20, thereby not only extending the optical path of the optical system, but also avoiding problems of an excessively large volume of the first prism 20 and an excessively large divergence degree of the light caused by an excessive number of total reflections and reflections within the first prism 20.

In some embodiments, after the light emitted by the image source 10 enters the first prism 20 from the first surface 201 of the first prism 2, before the light exits through the third surface 205 of the first prism 20 to the lens 30, the number of total reflections experienced within the first prism 20 may not be limited to one, and the number of reflections experienced within the first prism 20 may also not be limited to one. For example, after one total reflection occurs on the third surface 205 of the first prism 20 and after one reflection occurs on the second surface 203 of the first prism 20, another total reflection may occur at the third surface 205 of the first prism 20, and another reflection may occur at the second surface 203 of the first prism 20. Then, the light exits through the third surface 205 of the first prism 20 to the lens 30.

In some optional embodiments of the present disclosure, as shown in Figs. 1 to 3 and Figs. 7 to 8, the optical system may further include a second prism 50. The second prism 50 may have a first surface 501 and a second surface 503, wherein the first surface 501 of the second prism 50 may be arranged close to the eye box of the optical system; the first surface 501 of the second prism 50 may be away from the first prism 20; and the second surface 503 of the second prism 50 may be arranged close to the second surface 203 of the first prism 20. After being reflected by the reflective film 40, the light passes through the first prism 20 again and then exits after passing through the second surface 503 of the second prism 50 and the first surface 501 of the second prism 50, for example, the light exits to the eye box of the optical system.

When the light emitted by the image source 10 passes through the first prism 20, the light rays from different positions on a light-emitting surface of the image source 10 will pass through different parts of the first prism 20, thereby resulting in a difference in their optical paths. The second prism 50 can compensate for this optical path difference.

As shown in Figs. 1 to 3 and Figs. 7 to 8, both the first surface 501 and the second surface 503 of the second prism 50 can be flat surfaces. The first surface 501 and the second surface 503 of the second prism 50 can intersect. The second surface 503 of the second prism 50 can be attached to the second surface 203 of the first prism 20. Optionally, the second prism 50 can be a triangular prism.

After the light emitted by the image source 10 is reflected by the reflective film 40, the reflected light can pass through the first prism 20 and reach the second surface 503 of the second prism 50, and then enter the second prism 50. Afterwards, the light can exit through the first surface 501 of the second prism 50, for example, the light can exit to the eye box of the optical system.

In this way, when the second prism 50 is introduced, the light emitted by the image source 10 can enter the eye box of the optical system. In this way, the human eye 100 can see the display image provided by the image source 10. In addition, the second prism 50 can compensate for the optical path difference of the light rays emitted from different light-emitting positions on the image source 10 after propagating within the first prism 20, such that the optical paths of the light rays emitted from different light-emitting positions are basically the same, thereby reducing image distortion and improving the imaging quality of the optical system.

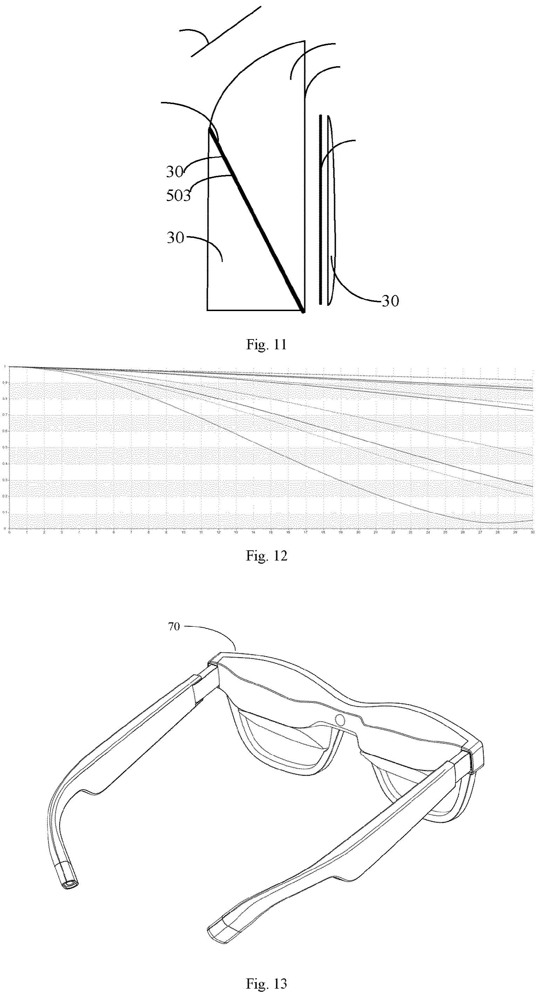

In some optional embodiments of the present disclosure, as shown in Figs. 5 and 11, a polarizing beam-splitting film 52 may be arranged between the second surface 203 of the first prism 20 and the second surface 503 of the second prism 50. A quarter-wave plate 55 may be arranged between the lens 30 and the third surface 205 of the first prism 20.

As shown in Figs. 5 and 11, the polarizing beam-splitting film 52 can be attached to the second surface 203 of the first prism 20 and the second surface 503 of the second prism 50. Optionally, the polarizing beam-splitting film 52 can be bonded to at least one of the second surface 203 of the first prism 20 and the second surface 503 of the second prism 50. The quarter-wave plate 55 and the lens 30 can be separated by a certain distance. The quarter-wave plate 55 and the third surface 205 of the first prism 20 can also be separated by a certain distance.

Due to the arrangement of the polarizing beam-splitting film 52, when the light emitted by the image source 10 propagates to the polarizing beam-splitting film 52 through total reflection on the third surface 205 of the first prism 20, the polarizing beam-splitting film 52 can partially reflect the light, and the light reflected by the polarizing beam-splitting film 52 can be polarized light. The polarized light can exit through the third surface 205 of the first prism 20, and reach the reflective film 40 after passing through the quarter-wave plate 55 and the lens 30, so as to be reflected by the reflective film 40. Afterwards, the polarized light will pass through the lens 30 and the quarter-wave plate 55 again. Since the polarized light passes through the quarter-wave plate 55 twice, the polarization direction of the polarized light can be changed. When the polarized light reaches the polarizing beam-splitting film 52 after passing through the quarter-wave plate 55, the polarized light can directly transmit through the polarizing beam-splitting film 52, and enter the human eye 100 after passing through the second prism 50.

In this way, the light emitted by the image source 10 enters the polarizing beam-splitting film 52 when the light propagates within the first prism 20. The first type of linearly polarized light is reflected by the polarizing beam-splitting film 52. After transmitting through the third surface 205 of the first prism 20, the first type of linearly polarized light passes through the quarter-wave plate 55, such that the first type of the linearly polarized light is converted into the first type of circularly polarized light. After transmitting through the lens 30 and reflected by the reflective film 40, the first type of circularly polarized light is converted into the second type of circularly polarized light. When passing through the quarter-wave plate 55 again, the first type of circularly polarized light is converted into the second type of linearly polarized light, enters the first prism 20 and transmits through the polarizing beam-splitting film 52. Through cooperation of the polarizing beam-splitting film 52 and the quarter-wave plate 55, the light emitted by the image source 10 can propagate along a desired path and finally enter the eye box of the optical system, thereby ensuring that the human eye 100 can see the display image provided by the image source 10.

In some optional embodiments of the present disclosure, as shown in Figs. 2 to 3 and Figs. 7 to 8, the optical system may further include a second additional lens 60. The second additional lens 60 may be located at the side of the lens 30 away from the first prism 20.

Herein, the second additional lens 60 can be attached to the reflective film 40 arranged on the lens 30. Optionally, the second additional lens 60 and the reflective film 40 can be bonded together. Of course, the second additional lens 60 and the reflective film 40 can also be separated by a certain distance.

In an optional example, the second additional lens 60 can be used as a compensating lens for the lens 30 to compensate for the surface profile of the lens 30. As shown in Figs. 2 to 3 and Figs. 7 to 8, a light ray e1 may exist in the external environment. The light ray e1 can sequentially pass through the second additional lens 60, the reflective film 40, the lens 30, the first prism 20, and the second prism 50, and finally enter the eye box of the optical system. In this way, the light in the external environment can enter the human eye 100 without deflection. When the user wears the head-mounted display device to observe the external environment, he can see an undistorted environmental image.

In some optional embodiments of the present disclosure, among the light rays emitted by the image source 10, the light ray propagating along the optical axis of the optical system passes through a preset optical path length d within the first prism 20 when passing through the first prism 20 for the first time. For example, in the embodiments shown in Figs. 1 to 6, the optical system may satisfy the condition that the ratio f/d of the system focal length f of the optical system to the preset optical path length d is greater than or equal to 0.475 and less than or equal to 0.6. For example, in the embodiments shown in Figs. 7 to 12, the optical system may satisfy the condition that the ratio f/d of the system focal length f of the optical system to the preset optical path length d is greater than or equal to 0.45 and less than or equal to 0.60.

It should be noted that an optical system is a system including various optical elements combined in a certain order. For the optical system, the optical axis is a line connecting optical centers of optical elements in the optical system in sequence, and the optical elements are arranged along the optical axis.

Among the light rays emitted by the image source 10, the light ray along the optical axis of the optical system enters from the first surface 201 of the first prism 20, and the light ray propagating along the optical axis of the optical system exits through the third surface 205 of the first prism 20. The actual propagation path of the light ray emitted by the image source 10 and propagating along the optical axis of the optical system within the first prism 20 is represented as a target path, then the target path can be converted into the corresponding path of the light propagating in a vacuum, and the corresponding path obtained through conversion can be used as the preset optical path length d.

In the embodiments shown in Figs. 1 to 6, the ratio f/d of the system focal length f of the optical system to the preset optical path length d can be restricted within a range of [0.475, 0.60]. For example, f/d can be 0.475, 0.480, 0.50, 0.52, 0.54, 0.57, 0.60, etc., which will not be listed one by one herein.

In the embodiments shown in Figs. 7 to 12, the ratio f/d of the system focal length f of the optical system to the preset optical path length d can be restricted within a range of [0.45, 0.60]. For example, f/d can be 0.45, 0.46, 0.50, 0.52, 0.54, 0.57, 0.60, etc., which will not be listed one by one herein.

Through researches, it is found that restricting f/d within the range of [0.45, 0.60], and restricting f/d within the rang of [0.475, 0.60] in the above embodiments are conducive to achieving a larger eye relief (ER) and a larger eye box (EB) through an optical system with a smaller volume. A smaller volume is conducive to ensuring the miniaturization and lightweight of the optical system. A larger eye box is conducive to accommodating users with different interpupillary distances. A larger eye relief allows the user who wears glasses (such as myopia glasses) to use the head-mounted display device without removing his glasses. Restricting f/d within a range of [0.45, 0.60] is also conducive to the correction of field curvature and pupil shift distortion.

It should be noted that the eye relief (ER) is an important design index in the optical system. The eye relief can refer to a distance from the human eye to the plane of the first optical element (which can be considered as the optical element closest to the human eye) placed in the optical system. Optionally, the distance between the human eye 100 and the first surface 501 of the second prism 50 in Figs. 1 to 3 and 7 to 8 can be regarded as the eye relief.

In some optional embodiments of the present disclosure, the first additional lens 15 may satisfy the condition that T×N₂/d is greater than or equal to 0.1 and less than or equal to 0.2, where T represents the thickness of the first additional lens 15, and N₂ represents the refractive index of the first additional lens 15.

That is, the ratio T×N₂/d of the product of the thickness of the first additional lens 15 and the refractive index of the first additional lens 15 to the preset optical path length d can be restricted within a range of [0.1, 0.2]. For example, T×N₂/d can be 0.1, 0.12, 0.15, 0.16, 0.17, 0.18, 0.2, etc., which will not be listed one by one herein.

Through researches, it is found that restricting T×N₂/d within a range of [0.1, 0.2] is conducive to controlling the pupil shift distortion of the optical system and enabling the entire optical system to achieve a larger field of view within a small volume. In this way, the miniaturization, lightweight design, and field of view range of the optical system can be taken into account.

In some optional embodiments of the present disclosure, the focal length f2 of the first additional lens 15 may be greater than or equal to 15 millimeters and less than or equal to 35 millimeters.

That is, the focal length f2 of the first additional lens 15 can be restricted within a range of [15mm, 30mm]. For example, f2 can be 15 mm, 18 mm, 20 mm, 21mm, 24mm, 26mm, 28mm, 30mm, etc., which will not be listed one by one herein.

Through researches, it is found that restricting f2 within a range of [15mm, 30mm] can not only control the chief ray angle (CRA) and field curvature of the optical system, but also correct the field curvature and chromatic aberration, thereby being conducive to ensuring the imaging quality of the optical system.

In some optional embodiments of the present disclosure, the focal length f1 of the lens 30 may be greater than or equal to 10 millimeters and less than or equal to 20 millimeters.

That is, the focal length f1 of the lens 30 can be limited within a range of [10mm, 20mm]. For example, f1 can be 10mm, 12mm, 13mm, 14mm, 15mm, 16mm, 18mm, 20mm, etc., which will not be listed one by one herein.

By restricting f1 within a range of [10mm, 20mm], sufficient optical power can be provided for the optical system to achieve a large field of view. At the same time, the field curvature can be effectively corrected, thereby being conducive to ensuring the imaging quality of the optical system.

In the embodiments shown in Figs. 1 to 6, in some optional embodiments of the present disclosure, the ratio fL/f of the focal length fL of the first surface 201 of the first prism 20 to the system focal length f of the optical system may be greater than or equal to 2.

That is, the ratio fL/f of the focal length fL of the first surface 201 of the first prism 20 to the system focal length f of the optical system can be restricted within a range of [2, +∞). Then, fL/f can be a finite value, such as 2, 3, 4, 5, 10, 20, etc., which will not be listed one by one herein. In this case, the first surface 201 of the first prism 20 can be a curved surface. Alternatively, fL/f can also approach infinity. In this case, the first surface 201 of the first prism 20 can be a flat surface.

Restricting fL/f within a range of [2, +∞) is conducive to ensuring the rationality of the parameters of the first surface 201 of the first prism 20, so as to ensure the imaging quality of the optical system. In addition, when the first surface 201 of the first prism 20 is a curved surface, the first surface 201 of the first prism 20 can be an aspheric surface. The aspheric surface can correct field curvature and pupil shift distortion to further ensure the imaging quality of the optical system. Meanwhile, the difficulty in lens processing is not significantly increased.

In some optional embodiments of the present disclosure, the focal length fL of the first surface 201 of the first prism 20 is greater than or equal to 40 millimeters.

That is, the focal length fL of the first surface 201 of the first prism 20 can be restricted within a range of [40mm, +∞). Then, fL can be a finite value, such as 40, 45, 55, 60, 80, 100, etc., which will not be listed one by one herein. In this case, the first surface 201 of the first prism 20 can be a curved surface. Alternatively, fL can approach infinity. In this case, the first surface 201 of the first prism 20 can be a flat surface.

By restricting fL within a range of [40mm, +∞), the field curvature and pupil shift distortion can be corrected without significantly increasing the difficulty in lens processing, so as to ensure the imaging quality of the optical system. In addition, when the first surface 201 of the first prism 20 is a curved surface, the first surface 201 of the first prism 20 can be an aspheric surface. The field curvature and pupil shift distortion can be corrected through the aspheric surface to further ensure the imaging quality of the optical system.

In some optional embodiments of the present disclosure, the first additional lens 15 may be a plano-convex lens, and the focal length fL of the first surface 201 of the first prism 20 may be restricted within a range of [40mm, +∞). In this way, the processing difficulty of the first additional lens 15 is relatively low, and it is conducive to ensuring the imaging quality of the optical system. Referring to Fig. 3, the first additional lens 15 is a plano-convex lens, and the convex surface of the plano-convex lens may face the first surface 201 of the first prism 20.

In some optional embodiments of the present disclosure, at least one of the surface of the first additional lens 15 and the first surface 201 of the first prism 20 may satisfy: ([SAG(φ1)-SAG(φ2)]/[SAG(φ2)-SAG(φ3)] > 1), where φ1 > φ2 > φ3, φ1 - φ2 = φ2 - φ3, φ1, φ2, and φ3 all represent values of effective diameters, SAG(φ1) represents a sagittal height corresponding to φ1, SAG(φ2) represents a sagittal height corresponding to φ2, and SAG(φ3) represents a sagittal height corresponding to φ3.

Generally speaking, optical elements such as lenses may have an effective diameter portion and a portion at the edge for mounting and fixation, and the effective diameter portion can participate in imaging.

For the first surface 201 of the first prism 20, when the value of the effective diameter is φ1, the sagittal height of the first surface 201 of the first prism 20 can be represented as SAG(φ1). When the value of the effective diameter is φ2, the sagittal height of the first surface 201 of the first prism 20 can be represented as SAG(φ2). When the value of the effective diameter is φ3, the sagittal height of the first surface 201 of the first prism 20 can be represented as SAG(φ3). Since [SAG(φ1)-SAG(φ2)]/[SAG(φ2)-SAG(φ3)]>1, φ1>φ2>φ3, and φ1 - φ2 = φ2 - φ3. In this way, the change of pupil shift distortion can be reduced, the imaging quality can be guaranteed, and the processing difficulty of the lens can be lowered at the same time.

Optionally, the surface of the first additional lens 15 can also satisfy the above relational expression between the effective diameter and the sagittal height. For example, the convex surface of the first additional lens 15 in Fig. 3 satisfies the above relational expression between the effective diameter and the sagittal height, thereby reducing the change of pupil shift distortion, ensuring the imaging quality, and at the same time lowering the processing difficulty of the lens.

In some optional embodiments of the present disclosure, the refractive index N₂ of the first additional lens 15 may be greater than or equal to 1.4 and less than or equal to 2.0.

That is, the refractive index N₂ of the first additional lens 15 can be restricted within a range of [1.4, 2.0]. For example, N₂ can be 1.4, 1.5, 1.6, 1.7, 1.8, 2.0, etc., which will not be listed one by one herein. By restricting the refractive index N₂ of the first additional lens 15 within a range of [1.4, 2.0], the first additional lens 15 can effectively correct the field curvature and pupil shift distortion, thereby being conducive to the overall optical design of the optical system, and ensuring the imaging quality of the optical system.

In some optional embodiments of the present disclosure, the Abbe number AB₂ of the first additional lens 15 may be greater than or equal to 15 and less than or equal to 90.

That is, the Abbe number AB₂ of the first additional lens 15 can be restricted within a range of [15, 90]. For example, AB₂ can be 15, 20, 25, 30, 45, 60, 70, 80, 90, etc., which will not be listed one by one herein.

The Abbe number AB₂ of the first additional lens 15 is restricted within a range of [15, 90], such that the first additional lens 15 effectively corrects field curvature and pupil shift distortion, thereby being conducive to the overall optical design of the optical system and being conducive to the imaging quality of the optical system.

In some optional embodiments of the present disclosure, the refractive index N₁ of the lens 30 may be greater than or equal to 1.45 and less than or equal to 1.75.

That is, the refractive index N₁ of the lens 30 can be restricted within a range of [1.45, 1.75]. For example, N₁ can be 1.45, 1.50, 1.55, 1.60, 1.70, 1.75, etc., which will not be listed one by one herein.

Restricting the refractive index N₁ of the lens 30 within a range of [1.45, 1.75] is conducive to the overall optical design of the optical system and is conducive to ensuring the imaging quality of the optical system.

In some optional embodiments of the present disclosure, the Abbe number AB₁ of the lens 30 may be greater than or equal to 40 and less than or equal to 80.

That is, the Abbe number AB₁ of the lens 30 can be restricted within a range of [40, 80]. For example, AB₁ can be 40, 45, 50, 55, 60, 70, 80, etc., which will not be listed one by one herein.

Optionally, the lens 30 may have an aspherical surface. Through the aspherical surface, the field curvature and pupil shift distortion can be corrected to ensure the imaging quality of the optical system.

Restricting AB₁ within a range of [40, 80] is conducive to the overall optical design of the optical system, thereby being conducive to ensuring the imaging quality of the optical system.

In some optional embodiments of the present disclosure, an included angle a formed between the second surface 503 of the first prism 50 and the third surface 205 of the first prism 20 may be greater than or equal to 1/2 of a complementary angle of the critical angle at which a total reflection of light occurs within the first prism 20.

Herein, based on the refractive index of the first prism 20 and the refractive index of air, the critical angle at which a total reflection of light occurs within the first prism 20 can be determined. Assume that the critical angle at which a total reflection of light occurs within the first prism 20 is represented as C, then the included angle a can satisfy the following formula: a ≥ (90° - C)/2.

By making the included angle a greater than or equal to (90° - C)/2, the light emitted by the image source 10 can propagate along the set route and finally enter the eye box of the optical system, thereby avoiding adverse effects caused by an excessively small value of the included angle a. For example, when the light emitted by the image source 10 passes through the first prism 20 for the first time, one total reflection and one reflection can occur within the first prism 20.

In some optional embodiments of the present disclosure, the included angle a formed between the second surface 503 of the first prism 50 and the third surface 205 of the first prism 20 may be greater than or equal to 20 degrees and less than or equal to 30 degrees.

That is, the included angle a formed between the second surface 203 of the first prism 20 and the third surface 205 of the first prism 20 can be restricted within a range of [20°, 30°]. For example, the included angle a can be 20°, 23°, 25°, 26°, 28°, 30°, etc., which will not be listed one by one herein.

In some embodiments, the included angle a can be further restricted within a range of [25°, 30°].

Through researches, it is found that the included angle a is related to the eye box, the eye relief, and the volume of the optical system. Restricting the included angle a within a range of [20°, 30°] allows the light emitted by the image source 10 to propagate along the set route and finally enter the eye box of the optical system, thereby avoiding adverse effects caused by an excessively large or small value of the included angle a. For example, when the light emitted by the image source 10 passes through the first prism 20 for the first time, the light can undergo one total reflection and one reflection within the first prism 20.

In some optional embodiments of the present disclosure, the refractive index NL₁ of the first prism 20 may be greater than or equal to 1.5 and less than or equal to 1.8.

That is, the refractive index NL₁ of the first prism 20 can be restricted within a range of [1.5, 1.8]. For example, NL₁ can be 1.5, 1.6, 1.7, 1.8, etc., which will not be listed one by one herein.

In the embodiments of the present disclosure, the refractive index NL₁ of the first prism 20 is restricted within a range of [1.5, 1.8], thereby being conducive to reducing the volume of the optical system, meeting the design indices of the eye box and eye relief, and ensuring the imaging quality of the optical system.

In some optional embodiments of the present disclosure, the Abbe number ABL₁ of the first prism 20 is greater than or equal to 15 and less than or equal to 60.

That is, the Abbe number ABL₁ of the first prism 20 can be restricted within a range of [15, 60]. For example, ABL₁ can be 15, 20, 30, 40, 50, 60, etc., which will not be listed one by one herein.

Restricting the Abbe number ABL₁ of the first prism 20 within a range of [15, 60] is conducive to ensuring the rationality of the parameters of the first prism 20, and is conducive to ensuring the imaging quality of the optical system. In the embodiments shown in Figs. 7 to 12, it is also conducive to reducing the volume of the optical system, meeting the design indices of the eye box and eye relief and ensuring the imaging quality of the optical system.

In some optional embodiments of the present disclosure, the refractive index NL₂ of the second prism 50 is greater than or equal to 1.5 and less than or equal to 1.8.

That is, the refractive index NL₂ of the second prism 50 can be restricted within a range of [1.5, 1.8]. For example, NL₂ can be 1.5, 1.6, 1.7, 1.8, etc., which will not be listed one by one herein. Optionally, the specific values of NL₂ and NL₁ mentioned above can be the same or different.

In the embodiments of the present disclosure, restricting the refractive index NL₂ of the second prism 50 within a range of [1.5, 1.8] is conducive to effectively compensating for the optical path difference generated after the lights emitted from different light-emitting positions on the image source 10 propagate in the first prism 20, is conducive to ensuring the imaging quality of the optical system, and meeting the design indices of the eye relief.

In some optional embodiments of the present disclosure, the Abbe number ABL₂ of the second prism 50 is greater than or equal to 15 and less than or equal to 60.

That is, the Abbe number ABL₂ of the second prism 50 can be restricted within a range of [15, 60]. For example, ABL₂ can be 15, 20, 30, 40, 50, 60, etc., which will not be listed one by one herein. Optionally, the specific values of ABL₂ and ABL₁ mentioned above can be the same or different.

Restricting the Abbe number ABL₂ of the second prism 50 within a range of [15, 60] is conducive to effectively compensating for the optical path difference generated after the light emitted from different light-emitting positions on the image source 10 propagates in the first prism 20, is conducive to ensuring the imaging quality of the optical system, and meeting the design indices of the eye relief.

In some optional embodiments of the present disclosure, the field of view (FOV) of the optical system may be greater than or equal to 40 degrees and less than or equal to 80 degrees.

That is, the field of view (FOV) of the optical system can be restricted within a range of [40°, 80°]. For example, the FOV can be 40°, 50°, 60°, 70°, 80°, etc., which will not be listed one by one herein. In this way, in the embodiments of the present disclosure, the user can see clear images within a field of view greater than or equal to 40 degrees and less than or equal to 80 degrees, with a relatively large field of view.

In some optional embodiments of the present disclosure, for example, the volume V of the optical system as shown in Figs. 1 to 6 may be less than or equal to 10 cubic centimeters. That is, the volume V of the optical system may satisfy the following formula: V ≤ 10 cc. For example, V may be 5 cc, 6 cc, 7 cc, 8 cc, 9 cc, 10 cc, etc., which will not be listed one by one herein.

In some optional embodiments of the present disclosure, for example, the volume V of the optical system as shown in Figs. 7 to 12 may be less than or equal to 7 cubic centimeters. That is, the volume V of the optical system may satisfy the following formula: V ≤ 7 cc. For example, V may be 4 cc, 5 cc, 6 cc, 7 cc, etc., which will not be listed one by one herein.

In this way, in the embodiments of the present disclosure, the optical system has a small volume and a compact structure, thereby being conducive to ensuring the miniaturization and lightweight of the optical system.

In some optional embodiments of the present disclosure, the size of the eye box at the preset eye relief meets any of the following sizes:
the length LEN of the eye box is greater than or equal to 8 mm and less than or equal to 25 mm, and the height HEI of the eye box is greater than or equal to 3 mm and less than or equal to 10 mm; and
the diameter DIA of the eye box is greater than 6 mm.

That is, the length LEN of the eye box can be restricted within a range of [8 mm, 25 mm]. The height HEI of the eye box can be restricted within a range of [3 mm, 10 mm]. For example, LEN can be 8 mm, 10 mm, 15 mm, 20 mm, 25 mm, etc., and HEI can be 3 mm, 5 mm, 6 mm, 9 mm, 10 mm, etc., which will not be listed one by one herein. In addition, the diameter DIA of the eye box can be 6 mm, 6.5 mm, 7 mm, 8 mm, etc., which will not be listed one by one herein. In this way, the optical system can have a larger eye box, thereby being conducive to accommodating users with different interpupillary distances.

In the embodiments shown in Figs. 7 to 12, the first prism 20 may include a plano-convex lens 207 and a triangular prism 209.

The plano-convex lens 207 can be formed on one surface of the triangular prism 209. The convex surface of the plano-convex lens 207 can constitute the first surface 201 of the first prism 20. The other surfaces of the triangular prism 209 can respectively constitute the second surface 203 of the first prism 20 and the third surface 205 of the first prism 20.

Herein, the plano-convex lens 207 and the triangular prism 209 are two independent optical elements. For example, the plano-convex lens 207 and the triangular prism 209 can be molded separately. As shown in Fig. 4, the plano-convex lens 207 may have an upper surface and a lower surface. The upper surface of the plano-convex lens 207 may be a convex surface, and the lower surface of the plano-convex lens 207 may be a flat surface. The triangular prism 209 may have an upper left surface, a lower left surface, and a right surface. The lower surface of the plano-convex lens 207 may be attached to and fixedly connected with the upper left surface of the triangular prism 209. Optionally, the lower surface of the plano-convex lens 207 and the upper left surface of the triangular prism 209 may be bonded. The plano-convex lens 207 and the triangular prism 209 can be combined into the first prism 20. The upper surface of the plano-convex lens 207 can serve as the first surface 201 of the first prism 20. The lower left surface of the triangular prism 209 can serve as the second surface 203 of the first prism 20. The right surface of the triangular prism 209 can serve as the third surface 205 of the first prism 20.

In this way, by assembling the separately molded plano-convex lens 207 and the triangular prism 209, the molding process of the lenses can be simplified. In addition, since the convex surface of the plano-convex lens 207 serves as the first surface 201 of the first prism 20, the first surface 201 of the first prism 20 can be an aspherical surface. The field curvature and pupil shift distortion can be corrected through the aspherical surface to ensure the imaging quality of the optical system, thereby enhancing the usage experience of the user. Compared with lenses of other free-form surface profiles, the processing difficulty of the aspherical surface profile is relatively low.

In some embodiments, the plano-convex lens 207 and the triangular prism 209 can also be different parts of the first prism 20, such that the first prism 20 is a single optical element. For example, the first prism 20 with a curved first surface 201 can be directly obtained through an integral molding method, thereby being conducive to improving the assembly efficiency of the optical system.

In some optional embodiments of the present disclosure, the first surface 201 of the first prism 20 may have a focal length fL. The optical system may satisfy the condition that the ratio fL/f of the focal length fL of the first surface 201 of the first prism 20 to the system focal length f of the optical system is greater than or equal to 0.5 and less than or equal to 2.

That is, the ratio fL/f of the focal length fL of the first surface 201 of the first prism 20 to the system focal length f of the optical system can be restricted within a range of [0.5, 2]. For example, fL/f can be 0.5, 0.7, 0.8, 1, 1.3, 1.6, 1.9, 2, etc., which will not be listed one by one herein.

In the related technologies, some parameters of the optical system may restrict each other. For example, when the field of view of the optical system is increased, the volume of the optical system is easily increased. Through researches, it is found that restricting fL/f within a range of [0.5, 2] is conducive to achieving a larger field of view within a smaller volume. In this way, the miniaturization, lightweight design, and field of view range of the optical system can be taken into account.

In some optional embodiments of the present disclosure, the first surface 201 of the first prism 20 may be a curved surface. The first surface 201 of the first prism 20 may have a surface sagittal height SAGL. The optical system may satisfy the following condition: the ratio SAGL/L of the surface sagittal height SAGL of the first surface 201 of the first prism 20 to the actual length L corresponding to the preset optical path length d is greater than or equal to 0.05 and less than or equal to 0.15.

As shown in Fig. 4, the surface sagittal height SAGL of the first surface 201 of the first prism 20 may refer to the distance sagittal height of the vertex of the first surface 201.

It should be noted that the target distance mentioned above can be used as the actual length L corresponding to the preset optical path length d. The ratio SAGL/L of the surface sagittal height SAGL of the first surface 201 of the first prism 20 to the actual length L corresponding to the preset optical path length d can be restricted within a range of [0.05, 0.15]. For example, SAGL/L can be 0.05, 0.07, 0.08, 0.098, 0.11, 0.13, 0.14, 0.15, etc., which will not be listed one by one herein.

Through researches, it is found that restricting SAGL/L within a range of [0.5, 2] is conducive to controlling the chief ray angle (CRA), field curvature, and pupil shift distortion of the optical system, thereby being conducive to ensuring the imaging quality of the optical system.

In some optional embodiments of the present disclosure, the focal length fL of the first surface 201 of the first prism 20 may be greater than or equal to 5 millimeters and less than or equal to 30 millimeters.

That is, the focal length fL of the first surface 201 of the first prism 20 can be restricted within a range of [5mm, 30mm]. For example, fL can be 5mm, 8mm, 9mm, 10mm, 15mm, 18mm, 20mm, 25mm, 28mm, 30mm, etc., which will not be listed one by one herein.

Restricting fL within a range of [5mm, 30mm] is conducive to ensuring the rationality of the parameters of the first surface 201 of the first prism 20, such that the first surface 201 can effectively correct field curvature and pupil shift distortion to ensure the imaging quality of the optical system.

In some optional embodiments of the present disclosure, the optical system shown in Figs. 1 to 6 can meet the following conditions: (1) the system focal length of the optical system is 10.84 mm; (2) the field of view (FOV) of the optical system is 57°; (3) the focal length f₁ of the lens 30 is 12.25 mm; (4) the refractive index N₁ of the lens 30 is 1.509; (5) the Abbe number AB₁ of the lens 30 is 56.32; (6) the focal length f2 of the first additional lens 15 is 15.3 mm; (7) the refractive index N₂ of the first additional lens 15 is 1.77; (8) the Abbe number AB₂ of the first additional lens 15 is 50; (9) the ratio f/d of the system focal length f of the optical system to the preset optical path length d is 0.460; (10) the ratio f2/f of the focal length f2 of the first additional lens 15 to the system focal length f of the optical system is 1.411; (11) the ratio T×N₂/d of the product of the thickness of the first additional lens 15 and the refractive index of the first additional lens 15 to the preset optical path length d is 0.18.

It should be noted that excluding the surface of the second prism 50, the light emitted by the image source 10 can reach the human eye 100 after passing through fourteen surfaces in sequence. Then, these fourteen surfaces can be numbered in a reverse direction of the path that the light passes through. These fourteen surfaces can meet the requirements of the following Table 1 and Table 2:

**Table 1**

| No. of surfaces | Type of surfaces | Radius of curvature | Thickness | Refractive index | Abbe number | Inclination angle |
|---|---|---|---|---|---|---|
| 1 | Virtual image | Infinite | -5000 | | | |
| 2 | | Infinite | 15.00 | | | |
| 3 | Spherical surface | Infinite | 5.60 | 1.614 | 25.74 | |
| 4 | Spherical surface | Infinite | 0.16 | | | |
| 5 | Lens | Infinite | 2.00 | 1.509 | 56.32 | |
| 6 | Reflective curved surface | -37.03 | -2.00 | | | |
| 7 | | Infinite | -0.10 | | | |
| 8 | Spherical surface | Infinite | -2.80 | 1.614 | 25.74 | |
| 9 | Reflective flat surface | Infinite | 2.80 | 1.614 | 25.74 | 28° |
| 10 | Reflective flat surface | Infinite | -5.60 | 1.614 | 25.74 | 0° |
| 11 | Spherical surface | Infinite | -0.2 | | | -56° |
| 12 | Aspherical surface | -11.85 | -2.2 | 1.77 | 50 | |
| 13 | Spherical surface | Infinite | -0.6 | | | |
| 14 | Virtual image | | | | | |

**Table 2**

| Parameters (aspherical coefficients) | S6 | S12 |
|---|---|---|
| K | 3.631574468 | -1.038848439 |
| A | 7.07E-06 | -0.000865591 |
| B | 2.17E-07 | 1.41E-05 |
| C | -6.28E-09 | 2.56E-07 |
| D | 1.10E-10 | -8.96E-09 |
| E | -1.05E-12 | -6.30E-11 |
| F | 5.22E-15 | 8.78E-13 |
| G | -1.05E-17 | 2.45E-14 |

In the tables, "S6" in Table 2 may refer to the surface with a surface number of 6, and "S12" in Table 2 may refer to the surface with a surface number of 12.

In some optional embodiments of the present disclosure, the optical system shown in Figs. 7 to 12 can meet the following conditions: (1) the system focal length f of the optical system is 11.5 mm; (2) the field of view (FOV) of the optical system is 63°; (3) the focal length f₁ of the lens 30 is 11.9 mm; (4) the refractive index N₁ of the lens 30 is 1.494; (5) the Abbe number AB₁ of the lens 30 is 58.13; (6) the focal length fL of the first surface 201 of the first prism 20 is 18.4 mm; (7) the refractive index NL₁ of the first prism 20 is 1.639; (8) the Abbe number ABL₁ of the first prism 20 is 23.34; (9) the ratio f/d of the system focal length f of the optical system to the preset optical path length d is 0.46; (10) the ratio fL/f of the focal length fL of the first surface 201 of the first prism 20 to the system focal length f of the optical system is 1.6; (11) the ratio SAGL/L of the surface sagittal height SAGL of the first surface 201 of the first prism 20 to the actual length L corresponding to the preset optical path length d is 0.098.

It should be noted that the light emitted by the image source 10 can reach the human eye 100 after passing through 12 surfaces in sequence. Then, these twelve surfaces can be numbered in a reverse direction of the path that the light passes through. These twelve surfaces can meet the requirements of the following Table 3 and Table 4:

**Table 3**

| No. of surfaces | Type of surfaces | Radius of curvature | Thickness | Refractive index | Abbe number | Inclination angle |
|---|---|---|---|---|---|---|
| 1 | Virtual image | Infinite | -5000 | | | |
| 2 | | Infinite | 20.00 | | | |
| 3 | Spherical surface | Infinite | 6.50 | 1.64 | 23.34 | |
| 4 | Spherical surface | Infinite | 0.20 | | | |
| 5 | Lens | Infinite | 2.40 | 1.494 | 58.13 | |
| 6 | Reflective curved surface | -35.7156 | -2.40 | | | |
| 7 | | Infinite | -0.2 | | | |
| 8 | Spherical surface | Infinite | -3.10 | 1.64 | 23.34 | |
| 9 | Reflective flat surface | Infinite | 3.10 | 1.64 | 23.34 | 27° |
| 10 | Reflective flat surface | Infinite | -6.90 | 1.64 | 23.34 | 0° |
| 11 | Aspherical surface | 11.88 | -0.7 | | | -54° |
| 12 | Image surface | | | | | |

**Table 4**

| Parameters (aspherical coefficients) | S6 | S11 |
|---|---|---|
| K | -2.167651811 | -61.65828362 |
| A | -5.67E-06 | 0.00065491 |
| B | 3.40E-09 | -2.45E-05 |
| C | 1.39E-10 | 3.94E-07 |
| D | -3.96E-12 | -2.29E-09 |
| E | 5.06E-14 | 3.88E-11 |
| F | -2.94E-16 | -1.20E-12 |
| G | 6.75E-19 | 9.69E-15 |

In the tables, "S6" in Table 2 may refer to the surface with a surface number of 6, and "S11" in Table 2 may refer to the surface with a surface number of 11. The surface with a surface number of 6 may be the surface of the lens 30 away from the first prism 20, and the surface with a surface number of 11 may be the first surface 201 of the first prism 20.

On this basis, a modulation transfer function (MTF) curve of the optical system can be obtained. It can be understood that the MTF curve is a curve describing the performance of the optical system and can be configured to evaluate the ability of the optical system to restore contrast. Optionally, the MTF curve of the optical system can be as shown in Figs. 6 and 12. In Figs. 6 and 12, the horizontal axis can represent the spatial frequency, the vertical axis can represent the contrast, the solid line can represent the meridional direction, and the dashed line can represent the sagittal direction. As can be known from Figs. 6 and 12, the optical system has a good resolving power in different field-of-view directions and high overall imaging quality.

In summary, by using the optical system provided in the embodiments of the present disclosure, a large field of view can be achieved with a small volume. Moreover, the chief ray angle can be effectively controlled, so as to effectively correct the field curvature, pupil shift distortion, and chromatic aberration, and ensure the imaging quality. By using the optical systems provided in the embodiments shown in Figs. 7 to 12, a large eye box and eye relief can also be achieved.

Some exemplary embodiments of the present disclosure also provide a head-mounted display device. The head-mounted display device may include the frame structure 70 shown in Fig. 13 and the optical system in any of the above embodiments. The optical system may be mounted to the frame structure.

In some optional embodiments of the present disclosure, the frame structure 70 may be a structure capable of supporting and accommodating the optical system. For example, the frame structure 70 may include a spectacle frame, a headband, etc.

In the embodiments of the present disclosure, the optical system can be reliably mounted through the arrangement of the frame structure 70. Through the cooperation of each optical element in the optical system, the human eye 100 in Figs. 1 to 3 and Figs. 7 to 8 can see the display image provided by the image source 10 to meet the usage requirements of the user. In some embodiments, the human eye 100 can also see the external environment.

It should be noted that all the various optional embodiments and optional implementation manners disclosed above can be flexibly selected and combined as needed to achieve the corresponding functions and effects, and the present disclosure does not enumerate them one by one.

The basic principles of the present disclosure have been described above in combination with specific embodiments. However, it should be noted that the advantages, benefits, effects and the like mentioned in the present disclosure are merely examples and not limitations, and it cannot be considered that these advantages, benefits, effects and the like are essential for each embodiment of the present disclosure. In addition, the specific details disclosed above are only for the purpose of illustration and ease of understanding, rather than limitations. The above details do not restrict the present disclosure to be implemented by adopting the above specific details.

In this specification, the embodiments are described in a progressive manner. Each embodiment focuses on the differences from other embodiments. For the same or similar parts among the embodiments, reference can be made to each other.

Those skilled in the art can make various changes and modifications to the present disclosure without departing from the spirit and scope of the present application. Therefore, if these modifications and variations of the present application fall within the scope of the claims of the present disclosure and their equivalent technologies, the present disclosure is also intended to cover these modifications and variations.

## Claims

1. An optical system, comprising:
an image source;
a first prism having a first surface proximate the image source, a second surface and a third surface;
a lens proximate the third surface of the first prism, wherein the second surface of the first prism is away from the lens; and
a reflective film arranged on the side of the lens away from the third surface of the first prism;
wherein light rays emitted by the image source enter the first surface of the first prism, undergo at least one total reflection within the first prism, and then exit from the third surface of the first prism to the lens, among the light rays emitted by the image source, a light ray propagating along an optical axis of the optical system passes through a preset optical path length d within the first prism when the light ray passes through the first prism for the first time; the light rays reflected by the reflective film exit after passing through the first prism again; and
the optical system satisfies a condition that a ratio f/d of a system focal length f of the optical system to the preset optical path length d is greater than or equal to 0.45 and less than or equal to 0.60.

2. The optical system according to claim 1, further comprising a first additional lens proximate the image source; after the light rays emitted by the image source passes through the first additional lens, the light ray enter from the first surface of the first prism; and the optical system satisfies a condition that the ratio f/d of the system focal length f of the optical system to the preset optical path length d is greater than or equal to 0.475 and less than or equal to 0.6.

3. The optical system according to claim 2, wherein the first additional lens satisfies a condition that T×N₂/d is greater than or equal to 0.1 and less than or equal to 0.2, where T represents a thickness of the first additional lens, and N₂ represents a refractive index of the first additional lens.

4. The optical system according to claim 2, wherein at least one of a surface of the first additional lens and the first surface of the first prism satisfy: ([SAG(φ1)-SAG(φ2)]/[SAG(φ2)-SAG(φ3)] > 1), where φ1 > φ2 > φ3, φ1 - φ2 = φ2 - φ3, φ1, φ2 and φ3 all represent effective diameters, SAG(φ1) represents a sagittal height corresponding to φ1, SAG(φ2) represents a sagittal height corresponding to φ2, and SAG(φ3) represents a sagittal height corresponding to φ3.

5. The optical system according to claim 2, wherein a ratio fL/f of a focal length fL of the first surface of the first prism to the system focal length f of the optical system is greater than or equal to 2.

6. The optical system according to claim 2, wherein a refractive index N₂ of the first additional lens is greater than or equal to 1.4 and less than or equal to 2.0, and an Abbe number AB₂ of the first additional lens is greater than or equal to 15 and less than or equal to 90.

7. The optical system according to claim 1 or 2, wherein a refractive index N₁ of the lens is greater than or equal to 1.45 and less than or equal to 1.75, and an Abbe number AB₁ of the lens is greater than or equal to 40 and less than or equal to 80.

8. The optical system according to claim 1 or 2, wherein an included angle a formed between the second surface of the first prism and the third surface of the first prism is greater than or equal to 20 degrees and less than or equal to 30 degrees.

9. The optical system according to claim 1 or 2, wherein a refractive index NL₁ of the first prism is greater than or equal to 1.5 and less than or equal to 1.8, and an Abbe number ABL₁ of the first prism is greater than or equal to 15 and less than or equal to 60.

10. The optical system according to claim 1 or 2, wherein the optical system further comprises:
a second prism having a first surface away from the first prism and a second surface proximate the second surface of the first prism; after being reflected by the reflective film, the light rays pass through the first prism again, and then exit after passing through the second surface of the second prism and the first surface of the second prism.

11. The optical system according to claim 10, wherein a refractive index NL₂ of the second prism is greater than or equal to 1.5 and less than or equal to 1.8, and an Abbe number ABL₂ of the second prism is greater than or equal to 15 and less than or equal to 60.

12. The optical system according to claim 1 or 2, wherein the optical system further comprises:
a second additional lens located at the side of the lens away from the first prism.

13. The optical system according to claim 1 or 2, wherein a field of view (FOV) of the optical system is greater than or equal to 40 degrees and less than or equal to 80 degrees.

14. The optical system according to claim 2, wherein a volume V of the optical system is less than or equal to 10 cubic centimeters.

15. A head-mounted display device, comprising:
a frame structure; and
the optical system according to any one of claims 1-14, wherein the optical system is mounted to the frame structure.
